# EUROPÄISCHE PATENTSCHRIFT

(11) **EP 1 003 649 B1**
(45) Veröffentlichungstag und Bekanntmachung des Hinweises auf die Patenterteilung: **24.04.2002**
(21) Anmeldenummer: 98946280.9
(22) Anmeldetag: 06.08.1998
(51) Int. Cl.: B60H 1/00

(54) **STEUERUNG EINER KLIMAANLAGE IN EINEM KRAFTFAHRZEUG**
AIR-CONDITIONING CONTROL SYSTEM IN A MOTOR VEHICLE
COMMANDE D'UN SYSTEME DE CLIMATISATION DANS UN VEHICULE A MOTEUR

(30) Priorität: 19.08.1997 DE 19735855
(43) Veröffentlichungstag der Anmeldung: 31.05.2000
(73) Patentinhaber: DaimlerChrysler AG, 70567 Stuttgart (DE)
(72) Erfinder: GRASS, Thomas, D-73660 Urbach (DE); KOSIK, Franz, D-73760 Ostfildern (DE)
(86) Internationale Anmeldenummer: EP9804897
(87) Internationale Veröffentlichungsnummer: WO9908890

(56) Entgegenhaltungen:
- DE-A- 4 301 591
- DE-A- 4 339 935
- DE-A- 4 426 260

## Beschreibung

Die Erfindung betrifft die Steuerung einer Klimaanlage in einem Kraftfahrzeug mit automatischer Kupplung, dessen Motor, insbesondere Verbrennungsmotor, über ein vom Fahrer willkürlich zwischen Fahrstufen und Leerlauf (Trennung von Getriebeeingang und Getriebausgang) umschaltbares Getriebe und die zwischen Motor und Getriebe angeordnete Kupplung mit Antriebsrädern des Fahrzeuges verbunden bzw. verbindbar ist, wobei ein die Kupplung betätigendes Stellaggregat bei geschlossener Kupplung eine selbstjustierende Ausgangslage und bei geöffneter Kupplung eine Betätigungslage mit (langsamer) Temperaturdrift einnimmt.

Kraftfahrzeuge mit derartigen automatischen Kupplungen werden serienmäßig hergestellt. Die Temperaturdrift des von der Steuerung betätigten Stellaggregates kann bei allen Betriebszuständen vernachlässigt werden, bei denen die Kupplung nur mehr oder weniger kurzzeitig geöffnet wird. Dies ist der Fall, wenn Gange bzw. Fahrstufen des Getriebes gewechselt werden. Auch beim Anfahren des Fahrzeuges nimmt die Kupplung regelmäßig nur kurzzeitig einen geöffneten Zustand ein.

Soweit zur Überwachung des Ist-Zustandes der Kupplung Sensoren vorgesehen sind, kann deshalb auf aufwendige Anordnungen, die auch die Temperaturdrift zu erfassen vermögen, verzichtet werden.

Wird das Getriebe auf Leerlauf geschaltet, braucht die Kupplung an sich lediglich während des Schaltvorganges geöffnet zu werden. Sobald die Leerlaufstellung des Getriebes erreicht ist, kann die Kupplung wieder geschlossen werden, weil aufgrund der im Leerlauf vorliegenden antriebsmäßigen Trennung von Getriebeeingang und Getriebeausgang keine antriebsmäßige Verbindung zwischen Motor und Antriebsrädern des Fahrzeuges vorliegen und der Motor deshalb beliebig weiterlaufen kann.

Allerdings ist bei automatischen Kupplungen gemäß der gattungsgemäßen DE 44 26 260 A1 regelmäßig vorgesehen, die automatische Kupplung bei Leerlaufbetrieb offen zu lassen. Dies ist vorteilhaft, weil dadurch die Gefahr von Geräuschanregungen im Getriebe, sog. Getrieberasseln, im Leerlaufbetrieb deutlich vermindert wird.

Der Leerlaufbetrieb kann über längere Zeit aufrecht erhalten bleiben, so daß die bei geöffneter Kupplung auftretende Temparaturdrift des Stellaggregates nicht vernachlässigt werden kann. Deshalb ist nach der DE 44 26 260 A1 vorgesehen, die bei Leerlauf normal geöffnete Kupplung zur Rückstellung der Temperaturdrift in vorgegebenen Intervallen kurzzeitig vorübergehend zu schließen.

Aufgabe der Erfindung ist es nun, im Falle einer vom Fahrzeugmotor angetriebenen Klimaanlage eine optimale Steuerung zu gewährleisten. Diese Aufgabe wird erfindungsgemäß dadurch gelöst, daß die vom Motor angetriebene Klimaanlage vorübergehend abgeschaltet wird, wenn die Kupplung im Leerlaufbetrieb vorübergehend zur Beseitigung der Temperaturdrift des Stellaggregates geschlossen wird.

Die Erfindung berücksichtigt die neue Erkenntnis, daß bei Leerlaufbetrieb des Getriebes eine besondere Gefahr von Geräuschanregungen auftreten kann, wenn die Eingangsseite des Getriebes bei eingeschalteter Klimaanlage durch Schließen der Kupplung antriebsmäßig mit dem Motor gekoppelt wird.

Da die Kupplung im Leerlaufbetrieb zur Kompensation der Temparaturdrift jeweils nur äußerst kurzzeitig geschlossen wird, kann dann durch die ähnlich kurzzeitige Abschaltung der Klimaanlage praktisch keine Einbuße bei der Leistung der Klimaanlage auftreten. Vielmehr wird der Komfort des Fahrzeuges durch sichere Vermeidung von Geräuschen deutlich erhöht.

Im übrigen wird hinsichtlich bevorzugter Merkmale der Erfindung auf die Ansprüche sowie die nachfolgende Erläuterung der Zeichnung verwiesen, anhand der besonders bevorzugte Ausführungsformen der Erfindung beschrieben werden.

Dabei zeigt
- Fig. 1: eine stark schematisierte Darstellung des Antriebstranges eines Kraftfahrzeuges und
- Fig. 2: eine schematisierte Darstellung eines Stellaggregates mit hydraulischem Geber- und Nehmersystem zur Betätigung der Kupplung.

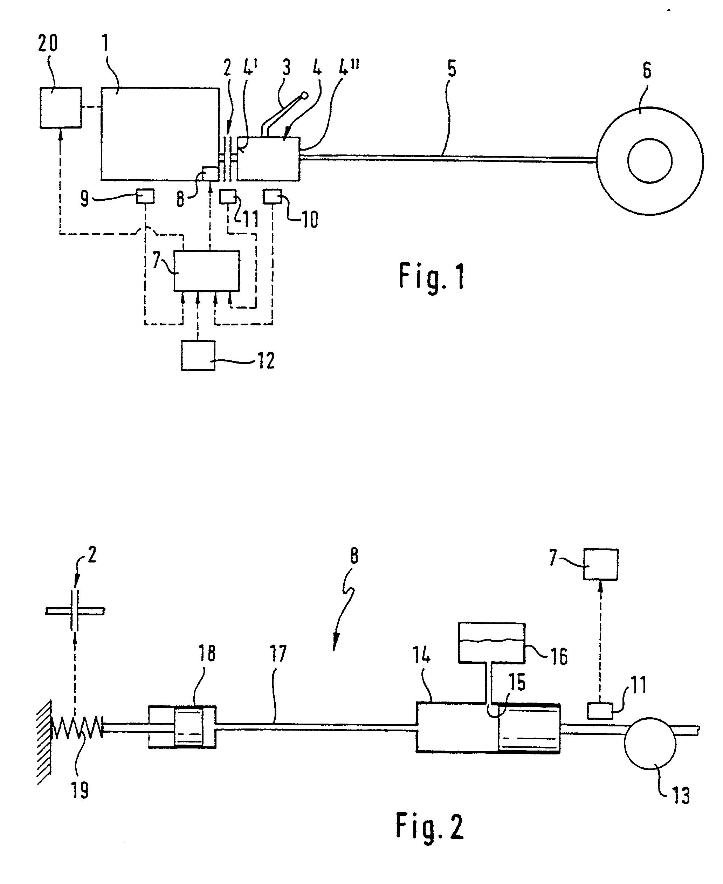

Gemäß Fig. 1 besitzt ein nicht näher dargestelltes Kraftfahrzeug einen Motor 1, typischerweise einen Verbrennungsmotor mit interner Verbrennung. Dieser Motor 1 ist über eine Kupplung 2 sowie ein vom Fahrer mittels Schalthebels 3 zwischen verschiedenen Fahrstufen und Leerlauf umschaltbares Getriebe 4 und zumindest eine Antriebswelle, z.B. eine Kardanwelle 5, mit angetriebenen Fahrzeugrädern 6 antriebsmäßig verbindbar.

Die Kupplung 2 wird von einer elektronischen, rechnergestützten Steuereinheit 7 automatisch betätigt. Dazu steuert die Steuereinheit 7 ein motorisches Stellaggregat 8, welches seinerseits die Kupplung 2 betätigt und dessen Konstruktion weiter unten beispielhaft erläutert wird.

Eingangsseitig ist die Steuereinheit 7 mit einer mehr oder weniger umfangreichen Sensorik verbunden, um die zur Betätigung der Kupplung 2 wesentlichen Parameter zu erfassen. Beispielsweise erfaßt ein Sensor 9 die Drehzahl und Leistung des Motors 1. Mittels einer Geberanordnung 10 wird einerseits ermittelt, ob das Getriebe 4 geschaltet wird, und andererseits, welche Fahrstufe eingelegt ist bzw. ob das Getriebe 4 auf Leerlauf gestellt ist, wobei zwischen Getriebeingang 4' und Getriebeausgang 4" keine Antriebsverbindung vorliegt. Ein Geber 11 kan dem Stellaggregat 8 zugeordet sein und dessen Ist-Zustand erfassen. Im Hinblick auf eine einfache Ausbildung des Gebers 11 bzw. eine einfache Signalverarbeitung durch die Steuereinheit 7 erfaßt der Geber 11 keinerlei Parameter, die direkt oder indirekt mit einer eventuellen Temperaturdrift des Stellaggregates 8 zusammenhängen.

Im übrigen können noch weitere Sensoranordnungen 12 vorgesehen sein, um zusätzliche Parameter zu erfassen, deren Berücksichtigung eine Optimierung der Betätigung der Kupplung 2 oder weiterer, nicht dargestellter Steuerfunktionen der Steuereinheit 7 ermöglicht.

Wird das Getriebe 4 umgeschaltet, wird die Kupplung 2 vorübergehend automatisch geöffnet. Dazu steuert die Steuereinheit 7 das Stellaggregat 8 in entsprechender Weise an. Beim Anfahren des Fahrzeuges wird die Kupplung 2 mit zunehmender Drehzahl und Leistung des Motors 1 zunehmend geschlossen.

Wird das Getriebe 4 auf Leerlauf geschaltet, ist eine besondere Betriebsweise für die Kupplung 2 vorgesehen, wie weiter unten erläutert wird.

Da bei dieser Betriebsweise eine merkliche Temperaturdrift am Stellaggregat 8 auftreten kann, wird zunächst das Stellaggregat 8 beispielhaft anhand der Fig. 2 erläutert.

Das Stellaggregat 8 umfaßt einen von der Steuereinheit 7 betätigten, in der Regel elektrischen Stellmotor 13, der antriebsmäßig mit dem Kolben eines als hydraulischer Geber angeordneten Kolben-Zylinder-Aggregates 14 verbunden ist. Wenn der Kolben dieses Aggregates 14 die dargestellte Ausgangslage einnimmt, ist der Kolbenarbeitsraum des Aggregates 14 über eine Schnüffelbohrung 15 mit einem relativ drucklosen Hydraulikreservoir 16 verbunden. Wenn der Kolben des Aggregates 14 in Fig. 2 nach links verschoben wird, wird die Schnüffelbohrung 15 vom Kolben abgesperrt, d.h. der Arbeitsraum des Kolbens des Kolben-Zylinder-Aggregates 14 wird gegenüber dem Reservoir 16 abgesperrt.

Das Kolben-Zylinder-Aggregat 14 ist über eine Hydraulikleitung 17 mit einem als hydraulischer Nehmer angeordneten weiteren Kolben-Zylinder-Aggregat 18 verbunden, dessen Kolben die in Fig. 2 nicht näher dargestellte Kupplung 2 (vgl. Fig. 1) bei Verschiebung in Fig. 2 nach links gegen die Kraft einer Federung 19 zu öffnen vermag, welche die Kupplung 2 in ihre Schließlage und damit den Kolben des Kolben-Zylinder-Aggregates 18 in die in Fig. 2 dargestellte Ausgangslage drängt.

Das dargestellte System funktioniert wie folgt:

Wenn die Kupplung 2 geöffnet werden soll, steuert die Steuereinheit 7 den Stellmotor 13 an, so daß derselbe den Kolben des Kolben-Zylinder-Aggregates 14 aus der in Fig. 2 dargestellten Ausgangslage nach links verschiebt. Dabei wird die Schnüffelbohrung 15 unter Absperrung überfahren, so daß das Kolben-Zylinder-Aggregat 18 mit dem vorgenannten Aggregat 14 hydraulisch zwangsgekoppelt wird und der Kolben des letzteren Aggregates 18 eine entsprechende Verschiebung nach links ausführt, wobei die Kupplung 2 geöffnet wird. Solange dieser Zustand nur kurzzeitig aufrechterhalten wird, kann durch Erwärmung der zwischen den Aggregaten 14 und 18 eingesperrten hydraulischen Säule keinerlei nennenswerter Temperaturdrift erfolgen.

Wenn jedoch das Getriebe 4 in Fig. 1 auf Leerlauf geschaltet ist und dieser Zustand längere Zeit aufrechterhalten bleibt, soll erfindungsgemäß auch die Kupplung 2 längere Zeit geöffnet bleiben, so daß die Kolben der Kolben-Zylinder-Aggregate 14 und 18 ihre nach links verschobene Stellung über längere Zeit einhalten müssen. Eine Erwärmung der hydraulischen Säule zwischen den Aggregaten 14 und 18 führt dann zwangsläufig auch bei stillstehendem Kolben des Kolben-Zylinder-Aggregates 14 zu einer Relativbewegung des Kolbens des Aggregates 18 relativ zum Kolben des Aggregates 14. Dies kann zu einer verschlechterten Steuerung der Kupplung 2 führen, wenn dieselbe nachfolgend gesteuert geschlossen werden soll, indem der nach links verschobene Kolben des Kolben-Zylinder-Aggregates 14 gesteuert in die Ausgangslage der Fig. 2 zurückgeführt wird.

Aus diesem Grunde ist erfindungsgemäß vorgesehen, daß bei Leerlauf-Betrieb die Kupplung 2 zwar an sich offengehalten, jedoch in vorgegebenen Zeitintervallen kurzzeitig geschlossen wird.

Da zum Schließen der Kupplung 2 der Kolben des Kolben-Zylinder-Aggregates 14 in die Ausgangslage der Fig. 2 zurückgeführt wird und dabei die Schnüffelbohrung 15 freigibt, kann die Federung 19 den Kolben des Kolben-Zylinder-Aggregates 18 in jedem Falle in die Ausgangslage der Fig. 2 zurückführen, denn die beiden Kolben-Zylinder-Aggregate 14 und 18 sind aufgrund der offenen Schnüffelbohrung 15 hydraulisch entkoppelt. Wird nachfolgend das Kolben-Zylinder-Aggregat 14 unter Absperrung der Schnüffelbohrung 15 erneut zur Öffnung der Kupplung 2 betätigt, hat zunächst der Kolben des Kolben-Zylinder-Aggregates 18 seine vorgegebene Soll-Lage relativ zum Kolben des Aggregates 14. Eine nachfolgende Temperaturdrift wird dann wiederum durch kurzzeitiges Schließen der Kupplung 2, d.h. durch Rückführung des Kolbens des Aggregates 14 in die Ausgangslage der Fig. 2 zurückgestellt.

Durch diese besondere Steuerung der Kupplung 2 bei Leerlauf-Betrieb wird gewährleistet, daß die Eingangsseite 4' des Getriebes 4 im Leerlauf praktisch dauernd vom Motor 1 antriebsmäßig entkoppelt ist. Dadurch wird die Gefahr von Geräuschanregungen - Getrieberasseln - im Leerlauf deutlich vermindert.

Oftmals treibt der Motor 1 gemäß Fig. 1 auch eine Klimaanlage 20 od.dgl., wobei im Leerlauf des Getriebes 4 eine besondere Gefahr von Geräuschanregungen auftreten kann, wenn die Eingangsseite 4' des Getriebes bei eingeschalteter Klimaanlage 20 durch Schließen der Kupplung 2 antriebsmäßig mit dem Motor 2 gekoppelt wird.

Deshalb ist gemäß einer besonders bevorzugten Ausführungsform der Erfindung vorgesehen, daß die Klimaanlage 20 bei auf Leerlauf geschaltetem Getriebe 4 immer dann automatisch vorübergehend abgeschaltet wird, wenn die Kupplung 2 vorübergehend zur Beseitigung der Temperaturdrift des Stellaggregates 8 geschlossen wird. Diese vorübergehende Ausschaltung der Klimaanlage 20 kann durch die Steuereinheit 7 erfolgen.

Da die Kupplung 2 zur Beseitigung der Temperaturdrift jeweils nur für größenordnungsmäßig ein bis zwei Sekunden geschlossen und danach wieder geöffnet wird, kann die Ausschaltung der Klimaanlage für eine entsprechend kurze Zeitspanne erfolgen, so daß die Betriebsunterbrechung der Klimaanlage 20 von den Fahrzeuginsassen überhaupt nicht bemerkt wird, andererseits aber die Gefahr der Anregung von Geräuschen, welche in Leerlauf-Phasen für die Fahrzeuginsassen besonders auffällig auffällig und störend sind, deutlich vermindert wird.

Die erfindungsgemäße Steuerung der Klimaanlage 20 kann von der Steuereinheit 7 übernommen werden.

## Patentansprüche

1. Steuerung einer Klimaanlage in einem Kraftfahrzeug mit automatischer Kupplung, dessen Motor, insbesondere Verbrennungsmotor, über ein vom Fahrer willkürlich zwischen Fahrstufen und Leerlauf umschaltbares Getriebe und die zwischen Motor und Getriebe angeordnete Kupplung mit Antriebsrädern verbunden bzw. verbindbar ist, wobei ein die Kupplung betätigendes Stellaggregat bei geschlossener Kupplung eine selbstjustierende Ausgangslage und bei geöffneter Kupplung eine Betätigungslage mit Temperaturdrift einnimmt, und die bei Leerlauf normal geöffnete Kupplung (2) zur Rückstellung der Temperaturdrift in vorgegebenen Intervallen kurzzeitig geschlossen wird,
**dadurch gekennzeichnet,**
**daß** eine vom Motor (1) angetriebene Klimaanlage (20) vorübergehend abgeschaltet wird, wenn die Kupplung (2) im Leerlauf vorübergehend zur Beseitigung der Temperaturdrift des Stellaggregates (8) geschlossen wird.

2. Steuerung nach Anspruch 1,
**dadurch gekennzeichnet,**
**daß** die Kupplung (2) im Leerlauf intvervallweise für jeweils größenordnungsmäßig ein bis zwei Sekunden geschlossen wird.

3. Steuerung nach einem der Ansprüche 1 und 2,
**dadurch gekennzeichnet,**
**daß** das Stellaggregst (8) als hydraulisches Geber- und Nehmersystem (14 bis 18) mit geber- bzw. nehmerseitigen Verdrängeraggregaten (14,18) ausgebildet ist, wobei zwischen Geber (14) und Nehmer (18) bei betätigtem Geber (14) - d.h. insbesondere bei geöffneter Kupplung (2) - eine Hydrauliksäule eingesperrt ist und bei unbetätigtem Geber (14) ein relativ druckloses Hydraulikreservoir (16) mit der Hydrauliksäule kommuniziert.

4. Steuerung nach einem der Ansprüche 1 bis 3,
**dadurch gekennzeichnet,**
**daß** dem Stellaggregat (8) eine dessen Stellung ohne die Temperaturdrift erfassende Sensoranordnung (11) zugeordnet ist.

5. Steuerung nach einem der Ansprüche 1 bis 4,
**dadurch gekennzeichnet,**
**daß** eine Steuereinheit (7) der Kupplung (2) die Abschaltung der Klimaanlage (20) übernimmt.

## Claims

1. Control for an air conditioner in a motor vehicle with automatic clutch, the engine of which vehicle, especially an internal combustion engine, can be connected to the driving wheels by way of a transmission, which can be shifted arbitrarily by the driver between driving ranges and idling, and the clutch arranged between engine and transmission, a servo control unit that operates the clutch assuming a self-adjusting initial position when the clutch is closed and an operating position with temperature drift when the clutch is opened, and the clutch (2), normally opened when idling, being closed for briefly resetting the temperature drift at predetermined intervals,
**characterized in that**
an air conditioner (20) driven by the engine (1) is temporarily switched off when the clutch (2), whilst idling, is temporarily closed in order to eliminate the temperature drift of the servo control unit (8).

2. Control according to Claim 1,
**characterized in that**
the clutch (2), when idling, is closed at intervals for approximately one to two seconds in each instance.

3. Control according to either of Claims 1 and 2,
**characterized in that**
the servo control unit (8) is designed as hydraulic master and slave system (14 to 18) with master- and slave-side displacer units (14, 18), a hydraulic column being enclosed between master (14) and slave (18) when the master (14) is operated - that is, in particular, when the clutch (2) is opened - and a relatively unpressurized hydraulic reservoir (16) connecting with the hydraulic column when the master (14) is inoperative.

4. Control according to one of Claims 1 to 3,
**characterized in that**
a sensor device (11) registering the position of the servo control unit (8) without the temperature drift is assigned to the said unit.

5. Control according to one of Claims 1 to 4,
**characterized in that**
a control unit (7) of the clutch (2) shuts off the air conditioner (20).

## Revendications

1. Commande d'une installation de climatisation dans un véhicule à moteur disposant d'un embrayage automatique, dont le moteur, en particulier un moteur à combustion, est relié, respectivement susceptible d'être relié avec des roues entraînées, au travers d'une boîte de vitesses, dont les rapports peuvent être changés volontairement par le conducteur entre des rapports correspondant aux différents régimes de marche ainsi qu'à la marche à vide, ainsi qu'au travers d'un embrayage disposé entre le moteur et la boîte de vitesses, un dispositif de réglage, qui commande l'embrayage se trouvant, lorsque l'embrayage est fermé, dans une position de départ, disposant d'un effet auto-adjustant, alors que, lorsque l'embrayage est ouvert, ledit dispositif de réglage se trouve dans une position d'actionnement offrant une variation selon la température, l'embrayage (2), normalement ouvert lors de la marche à vide, étant brièvement fermé en des intervalles prédéterminés, pour permettre la remise à zéro des variations selon la température,
**caractérisée en ce qu'**
une installation de climatisation (20) entraînée par le moteur (1) est temporairement éteinte lorsque dans la marche à vide l'embrayage (2) est fermé temporairement pour mettre à zéro la variation du dispositif de réglage (8) selon la température.

2. Commande selon la revendication 1,
**caractérisé en ce que**
l'embrayage (2) en marche à vide, est fermé par intervalles chaque fois pour une durée d'un ordre de grandeur de un à deux secondes.

3. Commande selon une des revendications 1 et 2,
**caractérisée en ce que**
le dispositif de réglage (8) est réalisé en forme de système hydraulique du type donneur/accepteur (14-18) disposant de dispositifs de déplacement (14, 18) coté donneur ainsi que coté accepteur, une colonne hydraulique étant coincée entre donneur (14) et accepteur (18) lorsque le donneur (14) est actionné - c'est-à-dire en particulier lorsque l'embrayage (2) est ouvert - et, lorsque le donneur (14) n'est pas actionné, un réservoir hydraulique (16) relativement sans pression, communique avec la colonne hydraulique.

4. Commande selon l'une des revendications 1-3,
**caractérisé en ce que**
le dispositif de réglage (8) dispose d'une première position, sans dispositif de capteur (11) pour l'appréhension de la variation de température.

5. Commande selon l'une des revendications 1-4,
**caractérisé en ce qu'**
une unité de commande (7) de l'embrayage (2) agit pour éteindre l'installation de climatisation (20).
